(19) **Europäisches Patentamt**

**European Patent Office**

**Office européen des brevets**

(11) **EP 1 430 092 B1**

(12) **FASCICULE DE BREVET EUROPEEN**

(45) Date de publication et mention
de la délivrance du brevet:
**05.04.2006 Bulletin 2006/14**

(21) Numéro de dépôt: **02798741.1**

(22) Date de dépôt: **18.09.2002**

(51) Int Cl.:
***C08J 7/06*** *(2006.01)*     *C08L 27/06* *(2006.01)*

(86) Numéro de dépôt international:
**PCT/EP2002/010520**

(87) Numéro de publication internationale:
**WO 2003/025050 (27.03.2003 Gazette 2003/13)**

(54) **PROCEDE DE TRAITEMENT DE SURFACE D'OBJETS VIEILLIS DE POLYCHLORURE DE VINYLE**

VERFAHREN ZUR OBERFLÄCHENBEHANDLUNG VON GEALTERTEN
POLYVINYLCHLORIDGEGENSTÄNDEN

METHOD OF TREATING THE SURFACE OF AGED OBJECTS WITH POLYVINYL CHLORIDE

(84) Etats contractants désignés:
**AT BE BG CH CY CZ DE DK EE ES FI FR GB GR
IE IT LI LU MC NL PT SE SK TR**

(30) Priorité: **18.09.2001 FR 0112116**

(43) Date de publication de la demande:
**23.06.2004 Bulletin 2004/26**

(73) Titulaire: **SOLVAY (Société Anonyme)
1050 Bruxelles (BE)**

(72) Inventeurs:
 • **TCHAPIAN, Michel
  B-1180 Bruxelles (BE)**
 • **COUDRY, Xavier
  F-21000 Dijon (FR)**
 • **LOMENECH, Pierre
  F-39100 Dole (FR)**
 • **CHARLES, Patrick
  B-1440 Braine-le-Chateau (BE)**
 • **THOMMERET, Richard
  B-1030 Bruxelles (BE)**

(74) Mandataire: **Jacques, Philippe et al
Solvay S.A.
Département de la Propriété Industrielle,
Rue de Ransbeek, 310
1120 Bruxelles (BE)**

(56) Documents cités:
  **EP-A- 0 306 006          FR-A- 933 843
  FR-A- 936 804**

**Description**

La présente invention concerne un procédé de traitement d'objets en une composition polymérique comprenant un polymère du chlorure de vinyle, vieillis naturellement en surface au cours de leur utilisation.

Il est connu que la coloration de la surface d'objets usagés en une composition polymérique comprenant un polymère du chlorure de vinyle, qui, au cours de leur utilisation, ont été exposés ou mis en contact avec une source dégradante telle que la chaleur, le froid, la lumière artificielle, la lumière solaire, l'obscurité, la pluie, le brouillard, l'humidité de l'air ambiant, une solution solvante, une solution détergente, peut vieillir naturellement en évoluant sensiblement par rapport à la coloration qu'avait la surface des objets neufs.

En particulier, on sait que la surface, initialement blanche, d'objets usagés, notamment de profilés usagés, en une composition polymérique comprenant un polymère du chlorure de vinyle et du dioxyde de titane, soumis à l'action de la lumière solaire, peut évoluer vers le jaune, le rouge, le rose ou le brun.

L'évolution de la coloration résulte de la dégradation du polymère du chlorure de vinyle, suivant des mécanismes complexes et méconnus, qui dépendent non seulement de la nature et de l'intensité des sources dégradantes mais aussi de la nature et des quantités de chacune des substances contenues dans la composition polymérique, en particulier du dioxyde de titane.

Un cas notoire est l'évolution vers une coloration à dominante rose de la surface, initialement blanche, de profilés usagés en une composition polymérique comprenant un polymère du chlorure de vinyle et du dioxyde de titane. Ce phénomène, connu sous le nom de « rosissement », est souvent observé sur des profilés usagés qui n'ont pas encore atteint leur durée de vie ordinaire (à savoir, au moins 10 ans), mais qui ont été exposés à la lumière solaire dans des conditions de faible ensoleillement et de forte humidité. Lorsque de telles conditions climatiques sont rencontrées dans une zone géographique donnée, le rosissement peut toucher un pourcentage élevé des profilés qui ont été posés dans cette zone.

On a déjà tenté de remédier au problème d'évolution de la coloration de la surface d'objets vieillis naturellement, en particulier au problème du rosissement de profilés, en repeignant la surface. Cette solution présente plusieurs inconvénients. Tout d'abord, le polymère dégradé n'est ni "réparé" ni retiré des objets. Ensuite, il n'est pas possible de garantir la stabilité de la coloration des objets peints. Enfin, ceux-ci sont fragilisés par la peinture elle-même.

On a également déjà tenté de résoudre ce problème en abrasant la couche des objets dont la coloration s'était dégradée par vieillissement naturel, puis en repolissant les objets. Ce procédé est coûteux en main d'oeuvre. Il s'applique difficilement dans les coins et sur les dormants au voisinage des murs. Sa réalisation fine demande du personnel affûté. Par ailleurs, la tenue au vieillissement des objets abrasés et repolis est médiocre.

Le brevet FR 0933843B divulgue un procédé de décoloration d'objets en chlorure de polyvinyle (PVC) présentant une coloration brune résultant de leur procédé de fabrication et comporte une étape de gonflement des objets à traiter par immersion dans une solution contenant un solvant organique et un agent oxydant (bain de gonflement) suivie d'un traitement de l'objet gonflé à une température supérieure à 60°C.

La demande de brevet EP 0306006A divulgue un traitement de surface d'un objet en PVC au moyen d'une solution organique d'un stabilisant UV. Ce traitement est effectué sous eau.

En définitive, le seul moyen fiable connu pour remédier au problème des objets vieillis naturellement en surface est leur remplacement pur et simple. Cette opération entraîne des débours importants. En outre, le fait de devoir remplacer prématurément des objets en PVC nuit à son image, tout particulièrement dans des applications où une longue durée de vie est souvent exigée, comme c'est le cas dans le domaine du bâtiment.

La présente invention a pour but de proposer un procédé qui permet de restaurer la coloration de la surface d'objets vieillis naturellement en surface au cours de leur utilisation, et qui présente de nombreux avantages par rapport aux procédés de l'art antérieur, sans en présenter les inconvénients.

A cet effet, l'invention concerne un procédé de traitement d'objets en une composition polymérique comprenant un polymère du chlorure de vinyle, vieillis naturellement en surface au cours de leur utilisation, qui comprend une étape (E), selon laquelle on traite, à l'air ambiant, la surface des objets au moyen d'une solution organique comprenant un peroxyde organique et un solvant organique (solution (S)).

Avantageusement, la solution (S) comprend en outre un stabilisant UV, ou le procédé selon l'invention comprend en outre une étape (E'), postérieure à l'étape (E), selon laquelle on traite la surface des objets au moyen d'une solution organique, différente de la solution (S), qui comprend un stabilisant UV et un solvant organique (solution (S')). Par stabilisant UV, on entend désigner un agent protégeant contre le rayonnement ultraviolet.

De préférence, le procédé selon l'invention comprend, outre l'étape (E), l'étape (E').

Les objets traités par le procédé selon l'invention sont avantageusement des objets formés, mis en oeuvre, finis ou semi-finis. Ils ne sont ni des compositions, ni des poudres, ni des granules.

A titre d'exemples d'objets qui peuvent être traités par le procédé selon l'invention, on peut citer les tubes et les raccords (rigides ou souples), les câbles (souples), les films et les feuilles (rigides ou souples), les tissus enduits (souples), les profilés (rigides ou souples), les plaques (rigides), les bouteilles et les flacons (rigides), les pièces injectées (rigides), les revêtements de sol et les revêtements muraux (souples), les mastics (souples), les objets moulés (souples) et les objets trempés (souples).

Le procédé selon l'invention convient particulièrement bien pour traiter des plaques et des profilés. Il convient tout particulièrement bien pour traiter des profilés.

A titre d'exemples de profilés, on peut citer les profilés en tant que tels et les profilés assemblés pour fabriquer des objets finis, comme les portes (dont les portes de garage), les châssis de fenêtres, les volets (comme les volets battants et les persiennes), les revêtements muraux, les clôtures et les profilés d'ameublement.

En qualifiant un objet de « vieilli naturellement en surface », on entend signifier qu'il s'agit d'un objet usagé dont la surface a, durant l'utilisation de l'objet, été exposée à ou a été mise en contact avec une source dégradante telle que la chaleur, le froid, la lumière artificielle, la lumière solaire, l'obscurité, la pluie, le brouillard, l'humidité de l'air ambiant, une solution solvante ou une solution détergente.

Le procédé selon l'invention convient particulièrement bien pour traiter des objets vieillis naturellement en surface qui ont été soumis à des conditions d'exposition particulières telles qu'explicitées ci-après.

Premièrement, le procédé selon l'invention convient particulièrement bien pour traiter les objets vieillis naturellement en surface par une exposition intermittente d'au moins une partie de leur surface à la lumière solaire directe. Il convient tout particulièrement lorsque l'exposition intermittente à la lumière solaire directe a eu lieu pendant au moins une période d'un an telle que la durée de l'ensoleillement a été inférieure ou égale à 2000 heures. Il excelle lorsque celle-ci a eu lieu pendant au moins une période d'un an telle que la durée de l'ensoleillement a été inférieure ou égale à 1500 heures.

Deuxièmement, le procédé selon l'invention convient particulièrement bien pour traiter les objets vieillis naturellement en surface par une mise en contact d'au moins une partie de la surface avec de l'eau ou avec de l'air ayant une humidité relative supérieure à 50%, pendant au moins une période d'un an.

Le procédé selon l'invention convient particulièrement bien pour traiter les objets vieillis naturellement en surface au cours de leur utilisation avec la conséquence particulière quant à leur aspect telle qu'explicitée ci-après.

Le procédé selon l'invention convient particulièrement bien pour traiter les objets vieillis naturellement en surface au cours de leur utilisation, en ce qu'au moins une partie de leur surface a une coloration différente de celle qu'avait la même partie desdits objets lorsqu'ils étaient neufs, juste après avoir été mis en oeuvre.

Par coloration différente, on entend signifier que l'écart colorimétrique global dans l'espace CIELAB® (1976) :

$$\Delta E_{ab}* = \sqrt{(L*_v - L*_n)^2 + (a*_v - a*_n)^2 + (b*_v - b*_n)^2}$$

entre la coloration de la partie de la surface qui a vieilli et celle de la même partie lorsque l'objet était neuf, est supérieur à 1 ; L\* est la luminance, a\* est la chromaticité selon l'axe vert-rouge et b\* est la chromaticité selon l'axe jaune-bleu ; l'indice v sous L\*, a\* et b\* fait référence à la partie de la surface qui a vieilli, tandis que l'indice n fait référence à la même partie lorsque l'objet était neuf.

Le procédé selon l'invention convient tout particulièrement bien pour traiter les objets vieillis naturellement en surface au cours de leur utilisation, en ce qu'au moins une partie de leur surface, qui était blanche lorsque ces objets étaient neufs, a acquis une coloration à dominante jaune, rose, rouge, brune ou grise. Le procédé selon l'invention excelle pour traiter les objets vieillis naturellement en surface au cours de leur utilisation, en ce qu'au moins une partie de leur surface, qui était blanche lorsque ces objets étaient neufs, a acquis une coloration à dominante rose, c'est-à-dire telle que l'écart entre l'indice de rose PI, défini comme étant égal à 100.(a\*+0,5.b\*)/L\*, de la surface qui était blanche lorsque ces objets étaient neufs et l'indice de rose PI de la surface ayant acquis une coloration à dominante rose après vieillissement naturel, est supérieur à 1; L\*, a\* et b\* tels que définis précédemment.

La composition polymérique en laquelle ont été fabriqués les objets traités par le procédé selon l'invention peut être une quelconque composition comprenant un polymère du chlorure de vinyle.

Par polymère du chlorure de vinyle, on entend désigner aussi bien un homopolymère du chlorure de vinyle, qu'un copolymère ayant au moins 50% en poids d'unités -CH$_2$-CHCl- formé par le chlorure de vinyle avec au moins un monomère éthyléniquement insaturé autre que le chlorure de vinyle.

A titre d'exemples de monomères éthyléniquement insaturés autres que le chlorure de vinyle, on peut citer les monomères vinyliques fluorés tels que le fluorure de vinylidène, les esters vinyliques comme l'acétate de vinyle, les monomères acryliques et méthacryliques comme l'acrylate de n-butyle, les monomères styréniques comme le styrène, les monomères oléfiniques comme l'éthylène, le propylène et le butadiène.

Le polymère du chlorure de vinyle a de préférence au moins 70% en poids d'unités -CH$_2$-CHCl-, et de manière particulièrement préférée au moins 85% en poids d'unités -CH$_2$-CHCl-.

Le procédé selon l'invention convient particulièrement bien pour traiter des objets en une composition polymérique qui comprend, outre un polymère du chlorure de vinyle, du dioxyde de titane. Celui-ci peut être sous la forme anatase ou rutile. Le procédé selon l'invention convient tout particulièrement bien lorsque le dioxyde de titane est sous la forme rutile. Le procédé selon l'invention excelle lorsque le dioxyde de titane est sous la forme rutile et est enrobé.

Le poids de dioxyde de titane rapporté au poids de polymère du chlorure de vinyle vaut avantageusement au moins 0,5% et de préférence au moins 1%. En outre, il vaut avantageusement au plus 20% et de préférence au plus 10%.

Le procédé selon l'invention convient tout particulièrement bien pour traiter des objets en une composition polymérique qui comprend, outre un polymère du chlorure de vinyle et du dioxyde de titane, un agent stabilisant thermique.

A titre d'exemples d'agent stabilisant thermique, on peut citer les sels, organiques ou inorganiques, d'étain, de baryum, de calcium, de cadmium, de' zinc et de plomb, ainsi que les oxydes et les hydroxydes de ces métaux.

Le procédé selon l'invention convient tout particulièrement bien lorsque l'agent stabilisant thermique est choisi parmi les agents stabilisants thermiques qui contiennent du plomb.

A titre d'exemples d'agents stabilisants thermiques qui contiennent du plomb, on peut citer le carbonate de plomb basique (2 $PbCO_3.Pb(OH)_2$), le phosphite de plomb dibasique (2 $PbO.PbHPO_3.\frac{1}{2}H_2O$), le stéarate de plomb Pb ($C_{17}H_{35}COO$)$_2$ et le stéarate de plomb dibasique (2 PbO. Pb($C_{17}H_{35}COO$)$_2$).

Le poids d'agent stabilisant thermique rapporté au poids de polymère du chlorure de vinyle vaut avantageusement au moins 0,5%, et de préférence au moins 1%. En outre, le poids d'agent stabilisant thermique rapporté au poids de polymère du chlorure de vinyle vaut avantageusement au plus 20%, de préférence au plus 15% et de manière tout particulièrement préférée au plus 10%.

La composition polymérique peut notamment comprendre, outre les composants susmentionnés, des additifs usuels de compositions polymériques tels que les plastifiants, les agents renforçant au choc, les charges, les pigments autres que le dioxyde de titane, les lubrifiants internes, les lubrifiants externes, les diluants, les agents régulateurs de viscosité, les agents moussants, les agents fongicides, les agents bactéricides. La composition polymérique comprend de préférence au plus 150% en poids, rapporté au poids de polymère du chlorure de vinyle, de tels additifs. De manière particulièrement préférée, elle en comprend au plus 50% en poids, et de manière tout particulièrement préférée, elle en comprend au plus 20% en poids.

Avantageusement, on nettoie avant l'étape (E) la surface des objets, par exemple en la dépoussiérant au moyen d'un tissu et/ou en la lavant au moyen d'une eau savonneuse.

Le traitement à l'étape (E) consiste avantageusement à faire diffuser la solution (S) dans la couche superficielle des objets.

A titre d'exemples d'un tel traitement, on peut citer, entre autres :

- tremper la surface des objets dans un bain contenant la solution (S) ;
- arroser la surface des objets au moyen de la solution (S) ;
- pulvériser la solution (S) sur la surface des objets ;
- enduire la surface des objets au moyen de la solution (S).

Avantageusement en outre, le traitement à l'étape (E) ne consiste pas à faire diffuser la solution (S) jusqu'au plus profond des objets. En particulier, si le traitement à l'étape (E) consiste à tremper la surface des objets dans un bain contenant la solution (S), ceux-ci sont avantageusement retirés du bain avant que la solution (S) n'ait diffusé jusqu'au plus profond d'eux-mêmes.

Le traitement à l'étape (E) consiste de préférence à enduire la surface des objets de la solution (S).

L'enduction de la surface des objets de la solution (S) peut être effectuée par des mouvements à sens unique ou de va-et-vient. En outre, elle est avantageusement effectuée sans frotter avec force sur la surface.

La vitesse de progression du front séparant la surface traitée de la surface non traitée est avantageusement inférieure à 100 mm/s, et de préférence inférieure à 50 mm/s. En outre, la vitesse de progression du front séparant la surface traitée de la surface non traitée est avantageusement supérieure à 1 mm/s, et de préférence supérieure à 5 mm/s.

L'enduction de la surface des objets de la solution (S) peut être effectuée par tout moyen approprié, par exemple au moyen d'un pinceau, d'une brosse ou d'un tissu, lequel peut être en coton ou en toute autre matière appropriée. De préférence, elle est effectuée au moyen d'un tissu.

Lorsque la forme des objets à traiter le permet, le tissu peut être fixé à un outil d'enduction. Celui-ci comprend avantageusement une plaquette rigide, qui supporte le tissu, et une poignée.

Le traitement à l'étape (E) est avantageusement réalisé sur l'entièreté de la surface des objets qui a été exposée à une source dégradante ou a été mise en contact avec une telle source. Ceci vaut même si seulement une partie de la surface exposée a une coloration différente de celle qu'avait la surface des objets lorsqu'ils étaient neufs, juste après avoir été mis en oeuvre. A titre d'exemple, si les objets sont des châssis de fenêtre, leur face extérieure a avantageusement été exposée dans son entièreté à la lumière solaire ; le traitement à l'étape (E) porte alors avantageusement sur l'entièreté de la face extérieure de ces châssis, même si seulement une partie de cette face extérieure présente une altération de la coloration.

L'étape (E) est avantageusement effectuée au moins jusqu'à ce que la totalité de la surface à traiter soit mouillée par la solution (S). Lorsque la surface des objets vieillis a une coloration différente de celle qu'avait la surface des objets neufs, l'étape (E) est effectuée de préférence au moins jusqu'à la restauration de la coloration de la totalité de la surface desdits objets ; de manière particulièrement préférée, l'étape (E) est effectuée au moins jusqu'à la restauration stable de la coloration d'au moins une partie de la surface de ces objets. Par restauration stable de la coloration, on entend indiquer que celle-ci n'évolue pas dans la demi-heure qui suit la fin de l'étape (E).

Il peut être nécessaire d'appliquer plusieurs fois successivement le traitement au moyen de la solution (S) pour restaurer stablement la coloration, des taches récalcitrantes étant notamment susceptibles d'apparaître dans les 10 minutes qui suivent le traitement. Plus de 4 traitements successifs au moyen de la solution (S) sont rarement nécessaires pour restaurer stablement la coloration. Entre ceux-ci, on laisse avantageusement reposer les objets pendant au moins 1 minute.

La température de l'air ambiant dans lequel on traite la surface des objets au moyen de la solution (S) est avantageusement inférieure à 40°C, de préférence inférieure à 35°C, et de manière particulièrement préférée inférieure à 30°C. En outre, elle est avantageusement supérieure à 0°C, de préférence supérieure 10°C et de manière particulièrement préférée supérieure à 15°C.

La solution (S) peut être une quelconque solution organique qui comprend un peroxyde organique et un solvant organique. Elle peut être préparée de quelque façon que ce soit, en utilisant notamment toute technique de mélange, de dissolution et de séparation de phase.

La concentration en peroxyde organique de la solution (S), exprimée en gramme par kilo de solution, vaut avantageusement au moins 2, de préférence au moins 5 et de manière particulièrement préférée au moins 10. En outre, elle vaut avantageusement au plus 500, de préférence au plus 200 et de manière particulièrement préférée au plus 100.

Le poids de peroxyde organique qui est retenu à la surface ou à l'intérieur des objets juste après que le traitement au moyen de la solution (S) ait été effectué, exprimé en gramme par $m^2$, vaut avantageusement au moins 0,1, de préférence au moins 1 et de manière particulièrement préférée au moins 5. En outre, il vaut avantageusement au plus 1000, de préférence au plus 200 et de manière particulièrement préférée au plus 100.

Le peroxyde organique est avantageusement choisi parmi les peroxydes de diacyle tels que le peroxyde de dibenzoyle, les peresters tels que le perbenzoate de tert-butyle, les percétals tels que le 2,2-bis-[t-butylperoxy]-butane, les peroxydes de dia(ra)lkyle tels que le peroxyde de di-t-butyle et le peroxyde de dicumyle, les hydroperoxydes d'a(ra) lkyle tels que l'hydroperoxyde de tert-butyle et l'hydroperoxyde de cumène, les peracides organiques et leurs sels sodiques, potassiques et ammoniacaux.

De préférence, le peroxyde organique est choisi parmi les peracides organiques et leurs sels sodiques, potassiques et ammoniacaux. De manière particulièrement préférée, le peroxyde organique est un peracide organique.

A titre d'exemples de peracides organiques, on peut citer :

- des monoperacides aliphatiques tels que l'acide performique, l'acide peracétique, l'acide perpropionique, l'acide perbutyrique, l'acide pervalérique, l'acide percaproique et l'acide percaprylique, lesquels peuvent être éventuellement substitués par un groupement $-OCH_3$ comme l'acide méthoxyperacétique, par un groupement -OH comme l'acide perlactique, par un groupement -Cl comme l'acide chloroperacétique, par un groupement $-NO_2$ comme l'acide nitroperpropionique, ou par tout autre groupement ;
- des monoperacides éthyléniquement insaturés tels que l'acide peracrylique ;
- des monoperacides aromatiques tels que l'acide perbenzoique, éventuellement substitué par un groupement tel que $-OCH_3$, -OH, -Cl ou $-NO_2$ ;
- des diperacides aliphatiques tels que l'acide peroxalique, l'acide permalonique, l'acide persuccinique, l'acide perglutarique, l'acide peradipique, l'acide persébaçique et l'acide diperdodécanedioique ;
- des diperacides aromatiques tels que l'acide perphtalique, éventuellement substitué par un groupement tel que $-OCH_3$, -OH, -Cl ou $-NO_2$ ;
- des polyperacides tels que l'acide nitrilotriperacétique et l'acide percitrique;

Une première caractéristique préférée du peracide organique est qu'il est aliphatique.

Une seconde caractéristique préférée du peracide organique est qu'il est un monoperacide.

Une troisième caractéristique préférée du peracide organique est qu'il a au plus 10 atomes de carbone. De manière particulièrement préférée, il a au plus 6 atomes de carbone, et de manière tout particulièrement préférée, il en a au plus 3.

De tous les peracides organiques, le préféré est l'acide peracétique.

Lorsque le peroxyde organique est un peracide organique, la solution (S) comprend avantageusement un acide organique, outre le peracide organique et le solvant organique. La concentration en acide organique de la solution (S), exprimée en gramme par kilo de solution, vaut de préférence au moins 2, de manière particulièrement préférée au moins 10 et de manière tout particulièrement préférée au moins 20. En outre, elle vaut de préférence au plus 200, de manière particulièrement préférée au plus 100.

L'acide organique a avantageusement la même formule chimique que le peracide organique, sauf que tout groupement percarboxyle du peracide est substitué par un groupement carboxyle.

Lorsque la solution (S) comprend un acide organique, outre le peracide organique et le solvant organique, celle-ci est avantageusement préparée en effectuant successivement les opérations suivantes (méthode (M)) :

- on mélange le solvant organique et une solution aqueuse comprenant le peracide organique à raison d'au plus 250 g/kg de solution aqueuse, l'acide organique à raison d'au plus 500 g/kg de solution aqueuse, de l'eau oxygénée à raison d'au plus 250 g/kg de solution aqueuse, et de l'eau, jusqu'à formation d'un mélange biphasique contenant une phase organique et une phase aqueuse ;
- on sépare la phase organique et la phase aqueuse ;
- on récupère la phase organique, laquelle constitue ladite solution (S).

La concentration en peracide organique dans la solution aqueuse, exprimée en gramme par kilo de solution aqueuse, vaut de préférence au plus 200. En outre, elle vaut avantageusement au moins 50, et de préférence au moins 100.

La concentration en acide organique dans la solution aqueuse, exprimée en gramme par kilo de solution aqueuse, vaut de préférence au plus 400. En outre, elle vaut avantageusement au moins 100 et de préférence au moins 200.

La concentration en eau oxygénée dans la solution aqueuse, exprimée en gramme par kilo de solution aqueuse, vaut de préférence au plus 200. En outre, elle vaut avantageusement au moins 50, et de préférence au moins 100.

Le volume du solvant organique rapporté au volume de la solution aqueuse vaut avantageusement au plus 20, de préférence au plus 10 et de manière particulièrement préférée au plus 6. En outre, il vaut avantageusement au moins ¼, de préférence au moins 1 et de manière particulièrement préférée au moins $^3/_2$.

La préparation selon la méthode (M) est avantageusement effectuée à la température ambiante.

Le solvant organique que comprend la solution (S) est avantageusement un agent conduisant au gonflement des polymères du chlorure de vinyle.

On peut trouver des agents conduisant au gonflement des polymères du chlorure de vinyle notamment parmi les alcools, les aldéhydes, les cétones, les monoesters, les diesters, les éthers, les hydrocarbures aliphatiques, les hydrocarbures aromati-ques, les hydrocarbures bromés et les hydrocarbures chlorés. A titre d'exemples de tels agents conduisant au gonflement des polymères du chlorure de vinyle, on peut citer la cyclohexanone, l'acétone, l'acétate de méthyle, le tétrahydrofurane, le 1,4-dioxane, le benzène, et des hydrocarbures chlorés comme le dichlorométhane, le chloroforme, le 1,1-dichloroéthane, le 1,1,2-trichloroéthane, le 1,1,2,2-tétra-chloroéthane, le trichloroéthylène, le perchloroéthylène et le chlorobenzène.

Une première caractéristique préférée du solvant organique est qu'il a un paramètre de solubilité δ qui vaut au moins 8,5. De manière particulièrement préférée, δ vaut au moins 9,0. De manière tout particulièrement préférée, δ vaut au moins 9,5. δ est le paramètre de solubilité du solvant organique tel que défini dans « Handbook of Chemistry and Physics », CRC Press, 64th edition, page C-696. Il est exprimé en unité d'Hildebrand (H). Des tables de valeurs de δ (en H) sont disponibles dans ce même traité.

Une deuxième caractéristique préférée du solvant organique est qu'il a un paramètre de solubilité δ qui vaut au plus 10,5. De manière particulièrement préférée, δ vaut au plus 10,0.

Une troisième caractéristique préférée du solvant organique est qu'il est choisi parmi les cétones, les monoesters, les éthers, les hydrocarbures aromatiques, les hydrocarbures bromés et les hydrocarbures chlorés. De manière particulièrement préférée, il est choisi parmi les hydrocarbures chlorés, et, de manière tout particulièrement préférée, parmi les hydrocarbures chlorés en $C_1$.

De tous les solvants organiques qui ont été utilisés pour préparer la solution (S), celui qui a donné les meilleurs résultats est le dichlorométhane.

La concentration en solvant organique de la solution (S), exprimée en gramme par kilo de solution, vaut avantageusement au moins 500, de préférence au moins 650 et de manière particulièrement préférée au moins 800. En outre, elle vaut avantageusement au plus 990, et de préférence au plus 970.

Lorsque la solution (S) comprend un stabilisant UV, celui-ci est avantageusement choisi parmi les stabilisants UV qui résistent à l'action oxydante des peroxydes organiques.

On peut trouver des stabilisants UV résistant à l'action oxydante des peroxydes organiques notamment parmi les agents complexants comme les complexes du nickel (II) et les phosphites organiques et parmi les filtres UV. Par filtre UV, on entend désigner un agent absorbant le rayonnement ultraviolet. Les filtres UV sont avantageusement des dérivés de la benzophénone, de la benzotriazole, du naphtalène, de l'acide salicylique, de l'acide benzoique, de l'oxalanilide et des dérivés cétoniques.

La concentration en stabilisant UV de la solution (S), exprimée en gramme par kilo de solution, vaut avantageusement au moins 1 ; en outre, elle vaut avantageusement au plus 100.

Outre les composants susmentionnés, la solution (S) peut éventuellement comprendre :

- au plus 50, et de préférence au plus 35 grammes par kilo de solution, d'eau ; la solution (S) comprend souvent de l'eau notamment lorsqu'elle a été préparée selon la méthode (M) ;
- au plus 20, et de préférence au plus 10 grammes par kilo de solution, d'eau oxygénée ; la solution (S) comprend souvent de l'eau oxygénée notamment lorsqu'elle a été préparée selon la méthode (M) ;
- au plus 50, et de préférence au plus 20 grammes par kilo de solution, d'additifs tels que des agents émulsionnants non ioniques et anioniques et des agents dispersants ; de manière particulièrement préférée, la solution (S) ne comprend pas de tels additifs.

Lorsque le procédé selon l'invention comprend une étape (E'), celle-ci est avantageusement réalisée au moins 10 minutes et, de manière particulièrement préférée, au moins 20 minutes après l'étape (E).

En outre, dans certains cas, il peut être avantageux, entre l'étape (E) et l'étape (E'), de rincer la surface des objets, de préférence à l'eau claire. Ceci vaut notamment lorsque la surface des objets a été traitée au moyen d'une quantité de solution (S) plus élevée que souhaité.

Le traitement à l'étape (E') est avantageusement est réalisé dans les mêmes conditions et a avantageusement les mêmes caractéristiques, à quelque niveau de préférence que ce soit, que celles du traitement à l'étape (E).

Toutefois, l'étape (E') se différencie de l'étape (E) par les caractéristiques et les conditions de réalisation mentionnées ci-après.

La fin de l'étape (E') n'est pas subordonnée à l'atteinte d'une certaine coloration, comme cela peut être le cas pour l'étape (E).

Dans certains cas, un dépôt blanchâtre peut apparaître à la surface des objets quelques heures après que l'étape (E') ait été réalisée. On peut éliminer sans peine ce dépôt sous forme de poussière en frottant les objets, à sec, au moyen d'un tissu ou d'un papier doux. Ceci n'a aucune conséquence dommageable pour les objets.

La concentration en stabilisant UV de la solution (S'), exprimée en gramme par kilo de solution, vaut avantageusement au moins 0,5, de préférence au moins 1, de manière particulièrement préférée au moins 2 et de manière tout particulièrement préférée au moins 5 ; en outre, elle vaut avantageusement au plus 250, de préférence au plus 100 et de manière particulièrement préférée au plus 50.

Le poids de stabilisant UV qui est retenu à la surface ou à l'intérieur des objets juste après que le traitement au moyen de la solution (S') ait été effectué, exprimé en gramme par $m^2$, vaut avantageusement au moins 0,005, de préférence au moins 0,05 et de manière particulièrement préférée au moins 0,25 ; en outre, il vaut avantageusement au plus 50, de préférence au plus 10 et de manière particulièrement préférée au plus 5.

Le stabilisant UV que comprend la solution (S') est avantageusement choisi parmi les agents complexants comme les complexes du nickel (II) et les phosphites organiques, les phénols et les amines encombrés stériquement comme le butylhydroxytoluène et l'éthylène bis-pipérazinone, et les filtres UV.

De préférence, le stabilisant UV que comprend la solution (S') est choisi parmi les filtres UV.

Les filtres UV sont avantageusement des dérivés de la benzophénone, de la benzotriazole, du naphtalène, de l'acide salicylique, de l'acide benzoique, de l'oxalanilide et des dérivés cétoniques.

A titre d'exemples de filtres UV dérivés de la benzophénone, on peut citer la 2-hydroxy-4-méthoxybenzophénone, la 2,2'-dihydroxy-4,4'-diméthoxybenzophénone et la 2-hydroxy-4-n-octyloxybenzophénone.

A titre d'exemples de filtres UV dérivés de la benzotriazole, on peut citer la 2-[2'-hydroxy-5-méthylphényl]-benzotriazole et la 2-[2'-hydroxy-3',5'-(di-t-butyl)phényl]-benzotriazole.

A titre d'exemples de filtres UV dérivés du naphtalène, on peut citer le benzolacétométhylnaphtalène et le furfurylidène-acétométhylnaphtalène.

A titre d'exemples de filtres UV dérivés de l'acide salicylique, on peut citer le salicylate de phényle, le monobenzoate de résorcinol, le salicylate de p-tert-butylphényle.

A titre d'exemple de filtre UV dérivé de l'oxalanilide, on peut citer la 2-éthyl-2'-éthoxyoxalanilide.

A titre d'exemples de filtres UV dérivés cétoniques, on peut citer la β-méthyl-ombelliférone et la dypnone.

Des substances telles que l'hydroquinone et ses éthers diéthylique et diméthylique, et le triparachlorophényl-stybine, sont également des filtres UV.

De manière particulièrement préférée, le stabilisant UV que comprend la solution (S') est choisi parmi les dérivés de la benzophénone et de la benzotriazole.

Le solvant organique de la solution (S') répond avantageusement, quant à sa nature, aux mêmes caractéristiques, à quelque niveau de préférence que ce soit, que celles du solvant organique de la solution (S).

La concentration en solvant organique de la solution (S'), exprimée en gramme par kilo de solution, vaut avantageusement au moins 700, de préférence au moins 850 et de manière particulièrement préférée au moins 900.

Outre les composants susmentionnés, la solution (S') peut éventuellement comprendre, tout comme la solution (S), des additifs tels que des agents émulsionnants non ioniques et anioniques et des agents dispersants. La concentration totale de la solution (S') en lesdits additifs vaut avantageusement au plus 50 grammes par kilo de solution, et de préférence au plus 10. De manière particulièrement préférée, la solution (S') ne comprend pas de tels additifs.

Le procédé selon l'invention présente de nombreux avantages.

Tout d'abord, il permet de restaurer durablement la coloration de la surface d'objets vieillis naturellement en surface au cours de leur utilisation. En particulier, il permet de restaurer durablement la coloration blanche de profilés rosis pour avoir été exposés dans des conditions de faible ensoleillement et de forte humidité.

Par "restaurer durablement la coloration", on entend indiquer que celle-ci n'évolue pas dans les mois, voire dans les années, qui suivent le traitement.

Ipso facto, le procédé selon l'invention évite le remplacement pur et simple des objets vieillis naturellement en surface au cours de leur utilisation, lequel remplacement est une opération coûteuse et nuisant à l'image du PVC.

Ensuite, le procédé selon l'invention est très simple à mettre en oeuvre, y compris par du personnel non spécialisé.

Enfin, il est peu coûteux. La restauration d'un objet demande peu de temps. Par ailleurs, le coût en matières premières des solutions de traitement est faible.

Les variantes du procédé selon l'invention selon lesquelles on traite les objets au moyen d'une solution (S) ou (S') comprenant un stabilisant UV, sont particulièrement avantageuses : les objets restaurés de la sorte ont souvent une tenue à la lumière et à la chaleur remarquable, supérieure à celle des objets neufs.

L'exemple qui suit est destiné à illustrer l'invention sans pour autant en limiter la portée.

EXEMPLE.

Description de l'objet à traiter.

La face extérieure d'un volet formé de profilés, en une composition polymérique comprenant 100 parts d'un homopolymère du chlorure de vinyle, 6,2 parts de dioxyde de titane rutile enrobé, 8,5 parts d'un stabilisant au plomb et 8,7 parts d'additifs usuels (dont 6,2 parts de carbonate de calcium), a, par intermittence, été exposée à la lumière solaire et mise en contact avec de l'eau de pluie pendant une période de 4 années consécutives, au cours desquelles la durée de l'ensoleillement a été respectivement, de la première à la quatrième année, d'environ 1700 heures/an, 1300 heures/an, 1600 heures/an et 1400 heures/an.

L'entièreté de la face extérieure du volet, qui était blanche lorsque le volet était neuf, a acquis une coloration rose homogène. On a mesuré celle-ci au moyen d'un spectrocolorimètre MINOLTA® CM-508d ; on a obtenu : $L^* = 88,13$, $a^* = 0,37$, $b^* = 3,0$ et $PI = 2,1$, $L^*$, $a^*$, $b^*$ et $PI$ tels que définis précédemment.

L'intérieur du même volet, qui n'a pas été exposé à la lumière solaire et qui n'a pas été mis en contact avec de l'eau de pluie, a conservé une coloration blanche. On a mesuré sa coloration au moyen du même spectrocolorimètre ; on a obtenu : $L^* = 91,8$, $a^* = -1,11$, $b^* = -2,56$ et $PI = -2,6$, $L^*$, $a^*$, $b^*$ et $PI$ tels que définis précédemment.

On a en outre calculé l'écart $\Delta E_{ab}^*$ entre la coloration de la face extérieure du volet et la coloration de la face intérieure du volet (qui n'a pas été exposée à la lumière solaire, ni mise en contact avec l'eau de pluie) ; on a obtenu $\Delta E_{ab}^* = 6,8$.

Préparation des solutions de traitement.

Préparation de la solution (S).

On a ouvert le bouchon d'une ampoule à décanter, munie d'un robinet à sa base et dudit bouchon dans sa partie supérieure. On a introduit dans l'ampoule à décanter 375 cm$^3$ de dichlorométhane, puis 125 cm$^3$ d'une solution aqueuse PROXITANE® 15 comprenant de l'acide peracétique à raison d'environ 150 g/kg de solution, de l'eau oxygénée à raison d'environ 150 g/kg de solution et de l'acide acétique à raison d'environ 300 g/kg de solution.

On a fermé le bouchon de l'ampoule à décanter. On a retourné celle-ci puis on en a ouvert aussitôt le robinet. On a laissé le robinet ouvert pendant environ 10 secondes. On a ensuite refermé le robinet et on a redressé l'ampoule à décanter.

On a secoué manuellement l'ampoule à décanter pendant environ 10 secondes. On a ainsi formé un mélange biphasique contenant une phase organique et une phase aqueuse.

On a laissé décanter, jusqu'à la séparation complète des phases organique et aqueuse. On a ensuite soutiré la phase organique, la plus dense, via un robinet situé au bas de l'ampoule. La phase organique a constitué la solution (S).

On a déterminé la composition de la solution (S). La solution (S) comprenait de l'acide peracétique à raison d'environ 20 g/kg de solution, de l'acide acétique à raison d'environ 40 g/kg de solution, de l'eau oxygénée à raison d'environ 1 g/kg de solution et du dichlorométhane à raison d'environ 935 g/kg.

Préparation de la solution (S').

On a introduit dans un bécher 500 cm$^3$ de dichlorométhane, puis on y a introduit, sous agitation, 10 g de 2-[2'-hydroxy-3',5'-(di-tert-butyl)phényl]-benzotriazole TINUVIN® 320.

On a poursuivi l'agitation jusqu'à dissolution complète du 2-[2'-hydroxy-3',5'-(di-tert-butyl)phényl]benzotriazole dans le dichlorométhane.

Traitement de l'objet.

La température de l'air ambiant au moment où le traitement a été réalisé était de 23°C.

Nettoyage.

On a dépoussiéré la face extérieure du volet au moyen d'un chiffon sec.

Enduction de la solution (S).

On a tendu un tissu en coton sur la plaquette rigide d'un outil d'enduction à poignée, puis on a imbibé le tissu en coton de la solution (S).

On a frotté avec le tissu, imbibé de la solution (S), sur l'entièreté de la face extérieure rosie du volet, sans forcer sur celle-ci, en faisant progresser le front séparant la surface enduite de la surface non enduite d'environ 15 mm/s, et en s'assurant que l'entièreté de la face extérieure ait recouvré une coloration blanche. On a réimbibé le tissu en coton de la solution (S) chaque fois que l'action de décoloration s'amenuisait.

Une fois le traitement d'enduction de la solution (S) terminé, on a attendu une demi-heure. Aucune tache récalcitrante n'est réapparue.

On a mesuré la coloration de la face extérieure du volet après son traitement par la solution (S) au moyen du colorimètre MINOLTA® CM-508d ; on a obtenu : $L^* = 91,94$, $a^* = -0,99$, $b^* = -2,76$, PI = -2,6, $L^*$, $a^*$, $b^*$ et PI tels que définis précédemment.

On a en outre calculé l'écart $\Delta E_{ab}^*$ entre la coloration de la face intérieure du volet et la coloration de la face extérieure du volet après traitement par la solution (S) ; on a obtenu $\Delta E_{ab}^* = 0,27$. Une aussi petite différence de coloration n'était pas perceptible par l'oeil humain.

Enduction de la solution (S').

On a tendu un tissu en coton sur la plaquette rigide d'un outil d'enduction à poignée, puis on a imbibé le tissu en coton de la solution (S').

Une demi-heure après la fin du traitement d'enduction de la solution (S) et aucune tache récalcitrante n'étant réapparue, on a frotté avec le tissu imbibé de la solution (S') sur l'entièreté de la face extérieure du volet, sans forcer sur celle-ci, en faisant progresser le front séparant la surface enduite de la surface non enduite d'environ 30 mm/s. On a réimbibé le tissu en coton de la solution (S') chaque fois que celui-ci s'était asséché.

On a mesuré la coloration de la face extérieure du volet après son traitement par la solution (S') au moyen du colorimètre MINOLTA® CM-508d ; on a obtenu : $L^* = 92,11$, $a^* = -1,23$, $b^* = -2,78$ et PI = -2,8, $L^*$, $a^*$, $b^*$ et PI tels que définis précédemment.

On a en outre calculé l'écart $\Delta E_{ab}^*$ entre la coloration de la face intérieure et la coloration de la face extérieure du volet après traitement par les solutions (S) et (S') ; on a obtenu $\Delta E_{ab}^* = 0,4$. Une aussi petite différence de coloration n'était pas perceptible par l'oeil humain.

**Revendications**

1. Procédé de traitement d'objets en une composition polymérique comprenant un polymère du chlorure de vinyle, vieillis naturellement en surface, au cours de leur utilisation, qui comprend une étape (E), selon laquelle on traite, à l'air ambiant, la surface des objets au moyen d'une solution organique comprenant un peroxyde organique et un solvant organique (solution (S)).

2. Procédé selon la revendication 1, **caractérisé en ce que** la solution (S) comprend en outre un stabilisant UV, ou **en ce que** le procédé comprend en outre une étape (E'), postérieure à l'étape (E), selon laquelle on traite la surface des objets au moyen d'une solution organique, différente de la solution (S), qui comprend un stabilisant UV et un solvant organique (solution (S')).

3. Procédé selon la revendication 2, **caractérisé en ce que** le procédé comprend, outre l'étape (E), l'étape (E').

4. Procédé selon la revendication 1, **caractérisé en ce que** là composition polymérique comprend en outre du dioxyde de titane.

5. Procédé selon la revendication 1, **caractérisé en ce que** le traitement à l'étape (E) consiste à enduire la surface des objets de la solution (S) .

6. Procédé selon la revendication 1, **caractérisé en ce que** la température de l'air ambiant est inférieure à 40°C.

7. Procédé selon la revendication 1, **caractérisé en ce que** le peroxyde organique est un peracide organique.

8. Procédé selon la revendication 7, **caractérisé en ce que** le peracide organique est l'acide peracétique.

9. Procédé selon la revendication 7, **caractérisé en ce que** la solution (S) comprend en outre un acide organique.

10. Procédé selon la revendication 9, **caractérisé en ce que** la solution (S) est préparée en effectuant successivement les opérations suivantes :

- on mélange le solvant organique et une solution aqueuse comprenant le peracide organique à raison d'au plus 250 g/kg de solution aqueuse, l'acide organique à raison d'au plus 500 g/kg de solution aqueuse, de l'eau oxygénée à raison d'au plus 250 g/kg de solution aqueuse, et de l'eau, jusqu'à formation d'un mélange biphasique contenant une phase organique et une phase aqueuse ;
- on sépare la phase organique et la phase aqueuse ;
- on récupère la phase organique, laquelle constitue ladite solution (S).

11. Procédé selon la revendication 1, **caractérisé en ce que** le solvant organique est un agent conduisant au gonflement des polymères du chlorure de vinyle.

12. Procédé selon la revendication 11, **caractérisé en ce que** l'agent conduisant au gonflement des polymères du chlorure de vinyle est le dichlorométhane.

**Claims**

1. Process for the treatment of articles made of a polymer composition comprising a vinyl chloride polymer which have naturally surface aged, during their use, which comprises a stage (E) according to which the surface of the articles is treated in ambient air with an organic solution comprising an organic peroxide and an organic solvent (solution (S)).

2. Process according to Claim 1, **characterized in that** the solution (S) additionally comprises a UV stabilizer or **in that** the process additionally comprises a stage (E'), subsequent to stage (E), according to which the surface of the articles is treated with an organic solution, different from the solution (S), which comprises a UV stabilizer and an organic solvent (solution (S')).

3. Process according to Claim 2, **characterized in that** the process comprises, apart from stage (E), stage (E').

4. Process according to Claim 1, **characterized in that** the polymer composition additionally comprises titanium dioxide.

5. Process according to Claim 1, **characterized in that** the treatment in stage (E) consists in coating the surface of the articles with the solution (S).

6. Process according to Claim 1, **characterized in that** the temperature of the ambient air is less than 40°C.

7. Process according to Claim 1, **characterized in that** the organic peroxide is an organic peracid.

8. Process according to Claim 7, **characterized in that** the organic peracid is peracetic acid.

9. Process according to Claim 7, **characterized in that** the solution (S) additionally comprises an organic acid.

10. Process according to Claim 9, **characterized in that** the solution (S) is prepared by successively carrying out the following operations:

   - the organic solvent is mixed with an aqueous solution comprising the organic peracid, in a proportion of at most 250 g/kg of aqueous solution, the organic acid, in a proportion of at most 500 g/kg of aqueous solution, hydrogen peroxide, in a proportion of at most 250 g/kg of aqueous solution, and water, until a two-phase mixture comprising an organic phase and an aqueous phase is formed;
   - the organic phase and the aqueous phase are separated;
   - the organic phase is recovered, which organic phase constitutes the said solution (S).

11. Process according to Claim 1, **characterized in that** the organic solvent is an agent which results in the swelling of vinyl chloride polymers.

12. Process according to Claim 11, **characterized in that** the agent which results in the swelling of vinyl chloride polymers is dichloromethane.

**Patentansprüche**

1. Verfahren zur Behandlung von Gegenständen aus einer ein Vinylchloridpolymer umfassenden Polymerzusammensetzung, die während ihres Gebrauches an der Oberfläche natürlich gealtert sind, das eine Stufe (E) umfaßt, wonach an der Umgebungsluft die Oberfläche der Gegenstände mit einer organischen Lösung behandelt wird, die ein organisches Peroxid und ein organisches Lösungsmittel (Lösung (S)) umfaßt.

2. Verfahren nach Anspruch 1, **dadurch gekennzeichnet, daß** die Lösung (S) zusätzlich einen UV-Stabilisator umfaßt oder daß das Verfahren zusätzlich eine Stufe (E'), im Anschluß an die Stufe (E), umfaßt, worin die Oberfläche der Gegenstände mit einer von der Lösung (S) verschiedenen organischen Lösung behandelt wird, die einen UV-Stabilisator und ein organisches Lösungsmittel umfaßt (Lösung (S')).

3. Verfahren nach Anspruch 2, **dadurch gekennzeichnet, daß** das Verfahren außer der Stufe (E) die Stufe (E') umfaßt.

4. Verfahren nach Anspruch 1, **dadurch gekennzeichnet, daß** die Polymerzusammensetzung zusätzlich Titandioxid umfaßt.

5. Verfahren nach Anspruch 1, **dadurch gekennzeichnet, daß** die Behandlung in der Stufe (E) aus einem Bestreichen der Oberfläche der Gegenstände mit der Lösung (S) besteht.

6. Verfahren nach Anspruch 1, **dadurch gekennzeichnet, daß** die Temperatur der Umgebungsluft unter 40°C liegt.

7. Verfahren nach Anspruch 1, **dadurch gekennzeichnet, daß** das organische Peroxid eine organische Persäure ist.

8. Verfahren nach Anspruch 7, **dadurch gekennzeichnet, daß** die organische Persäure die Peressigsäure ist.

9. Verfahren nach Anspruch 7, **dadurch gekennzeichnet, daß** die Lösung (S) zusätzlich eine organische Säure umfaßt.

10. Verfahren nach Anspruch 9, **dadurch gekennzeichnet, daß** die Lösung (S) **dadurch** hergestellt wird, daß aufeinanderfolgend die nachstehenden Vorgänge ausgeführt werden :

   - Mischen des organischen Lösungsmittels mit einer wäßrigen Lösung, die die organische Persäure in einer Menge von höchstens 250 g/kg der wäßrigen Lösung, die organische Säure in einer Menge von höchstens 500 g/kg der wäßrigen Lösung, sauerstoffhältiges Wasser in einer Menge von höchstens 250 g/kg der wäßrigen Lösung und Wasser umfaßt, bis zur Ausbildung eines zweiphasigen Gemisches, das eine organische Phase und eine wäßrige Phase enthält;

- Trennen der organischen Phase und der wäßrigen Phase;
- Gewinnen der organischen Phase, die die genannte Lösung (S) darstellt.

**11.** Verfahren nach Anspruch 1, **dadurch gekennzeichnet, daß** das organische Lösungsmittel ein Mittel ist, das zu einem Quellen der Vinylchloridpolymere führt.

**12.** Verfahren nach Anspruch 11, **dadurch gekennzeichnet, daß** das zum Quellen der Vinylchloridpolymere führende Mittel das Dichlormethan ist.